# EUROPÄISCHE PATENTSCHRIFT

(11) **EP 1 427 598 B1**
(45) Veröffentlichungstag und Bekanntmachung des Hinweises auf die Patenterteilung: **02.12.2009**
(21) Anmeldenummer: 02776997.5
(22) Anmeldetag: 05.09.2002
(51) Int. Cl.: B60K 35/00

(54) **VERFAHREN UND VORRICHTUNG ZUR DARSTELLUNG VON OPTISCHEN INFORMATIONEN IN EINEM KRAFTFAHRZEUG**
METHOD AND DEVICE FOR REPRESENTING OPTICAL INFORMATION IN A MOTOR VEHICLE
PROCEDE ET DISPOSITIF DE REPRESENTATION E DONNEES OPTIQUES DANS UN VEHICULE AUTOMOBILE

(30) Priorität: 11.09.2001 DE 10144752
(43) Veröffentlichungstag der Anmeldung: 16.06.2004
(73) Patentinhaber: VOLKSWAGEN AG, 38436 Wolfsburg (DE); Traveltainer Beteiligungs GmbH, 63808 Haibach (DE)
(72) Erfinder: PETERS, Dietmar, 38106 Braunschweig (DE); SCHNIER, Carsten, 38259 Salzgitter (DE); FALK, Dörte, 38106 Braunschweig (DE); LUX, Stefan, 38527 Meine (DE); FELDMANN, Rolf, 32457 Porta Westfalica (DE); HEIDEMANN, Uwe, 33184 Altenbeken (DE)
(74) Vertreter: Meyer, Enno
(86) Internationale Anmeldenummer: PCT/EP2002/009933
(87) Internationale Veröffentlichungsnummer: WO 2003/022618

(56) Entgegenhaltungen:
- DE-A- 3 628 333
- DE-A- 19 961 376
- DE-A- 19 961 871
- GB-A- 2 371 031
- US-B1- 6 307 280

## Beschreibung

Die Erfindung betrifft ein Verfahren zur Darstellung von optischen Informationen auf einer Anzeigeeinrichtung, insbesondere einem Display, in einem Kraftfahrzeug, nach dem Oberbegriff des Anspruchs 1 und eine entsprechende Vorrichtung nach dem Oberbegriff des Anspruchs 11.

In heutigen Kraftfahrzeugen existieren eine Vielzahl von Komponenten, die Informationen an den Fahrer vermitteln und akustische und optische Signale und Informationen erzeugen, wodurch der Fahrer in seiner Konzentration auf den Straßenverkehr abgelenkt werden kann. Neben dem klassischen Autoradio mit seinen Verkehrsnachrichten sind dies mittlerweile weiterhin Navigationssysteme mit optischer und akustischer Zielführung, mit Freisprecheinrichtungen versehene Mobiltelefone, d.h. Autotelefone, und Multifunktions-Bedieneinrichtung mit wechselnden graphischen Oberflächen.

Multifunktions-Bedieneinrichtungen, wie Sie heute bereits in Kraftfahrzeugen eingesetzt werden, weisen ein Farbdisplay geeigneter Größe auf, das beispielsweise eine Auflösung von 320 x 243 Bildpunkten haben kann und auch die Darstellung von Femseh- und Videobilder erlaubt. Daher ist an solchen Multifunktions-Bedieneinrichtungen oftmals die Möglichkeit eines Anschlusses eines TV-Tuners vorgesehen. Ferner ist bei einigen dieser Einrichtungen auch mit einer geeigneten Komponente über einen Mobilfunkanschluß eine Verbindung zum Internet möglich, wodurch Intemetinhalte auf der Anzeigeeinrichtung dargestellt werden können. Um eine Ablenkung des Fahrers zu vermeiden, wird das Fernsehbild oberhalb einer gewissen Geschwindigkeit auf dem Display abgeschaltet. Bei Internetangeboten und bei Infotainmentfunktionen würde jedoch ein derartiges Verhalten eine Informationseinschränkung bedeuten, wenn beispielsweise eine Fahrtroutenplanung für die Zielführung von einem geeigneten Dienstleister über das Internet bereitgestellt werden würde.

DE 199 61 871 A1 offenbart eine Vorrichtung und ein Verfahren zur Darstellung von optischen Informationen auf einer Anzeigeeinrichtung, mit einer Verarbeitungseinrichtung, welcher Informationen einer Informationsquelle zugeführt werden, wobei die Verarbeitungseinrichtung mit mindestens einer Einrichtung zur Ermittlung der Fahrzeugsituation und/oder der Fahrzeugumgebung und/oder des Aufmerksamkeitsgrades des Fahrzeugführers verbunden ist und einen Filter zum Filtern und Klassifizieren der von der mindestens einen Informationsquelle an die Verarbeitungseinrichtung übergebenen Informationen anhand der ermittelten Fahrzeugsituation und/oder Fahrzeugumgebung und/oder des Aufmerksamkeitsgrades des Fahrzeugführers aufweist.

Der Erfindung liegt daher die Aufgabe zugrunde, ein Verfahren und eine Vorrichtung zur Darstellung von optischen Informationen in einem Kraftfahrzeug zu schaffen, die die notwendigen Informationen an den Fahrer eines Kraftfahrzeugs ermöglichen.

Diese Aufgabe wird durch ein Verfahren nach Anspruch 1 und eine Vorrichtung nach Anspruch 11 gelöst. Bevorzugte Ausgestaltungen der Erfindung sind Gegenstand der Unteransprüche.

Bei dem erfindungsgemäßen Verfahren zur Darstellung von optischen Informationen auf einer Anzeigeeinrichtung in einem Kraftfahrzeug werden die Informationen kontextbezogen in Abhängigkeit von der Fahrsituation und/oder der Fahrzeugumgebung und/oder dem Aufmerksamkeitsgrad des Fahrzeugführers gefiltert und/oder dargestellt. Dabei werden die Informationen kontextbezogen vor der Darstellung gefiltert, wobei der Kontext der zu filternden Information von dem Filter anhand der Herkunft der Informationen bestimmt wird und wobei zumindest ein Teil der Informationen aus dem Internet abgerufen wird.

Dabei kann die benötigte Konzentration des Fahrers bzw. der Gefährlichkeitsgrad der Fahrsituation bzw. der Fahrzeugumgebung ein Maß für die Beurteilung sein. Vorzugsweise nimmt eine Filterung eine Klassifizierung der Informationen vor und es wird entsprechend der fahrsituationsabhängigen und/oder fahrzeugumgebungsabhängigen und/oder aufmerksamkeitsgradabhängigen Klassifizierung die Informationen darstellt, verändert und/oder reduziert und/oder nicht darstellt.

Insbesondere werden die Fahrzeuggeschwindigkeit, die Fahrzeugbeschleunigung und/oder die Gierbewegung des Kraftfahrzeuges und/oder die Fahrzeugneigung als Parameter für die Filterung und Klassifizierung der Informationen verwendet. Dabei können sowohl Momentanwerte, als auch über eine definierte Zeitdauer gemittelte Werte zur Filterung verwendet werden.

Des weiteren kann als Einflußgröße für die Filterung auch die Aktivierung eines Fahrerassistenzsystems, beispielsweise einer Abstandsregelung, zum Einsatz kommen.

Weiterhin ist denkbar, die Position des Fahrzeuges innerhalb des Straßennetzes, den Straßentyp und/oder Witterungsverhältnissen als Filtergröße zu verwenden. Auf diese Weise kann erreicht werden, daß die darzustellenden Informationen aufgrund ihres Inhalts situationsabhängig auf der Anzeigeeinrichtung dargestellt werden. Für den Fahrer in der entsprechenden Situation nicht relevante Informationen werden nicht mehr dargestellt, wenn die Situation des Fahrzeugs dies nicht mehr zuläßt, da eine zu große Ablenkung des Fahrers zu befürchten wäre. Dagegen können Informationen zur Darstellung zugelassen werden, wenn die Information trotz der Situation für den Fahrer wichtig ist, beispielsweise optisch dargestellt Stau und Verkehrsinformationen oder situationsabhängige Warninformationen.

Um den Kontext, d.h. den Inhalt der dem Fahrer der darzustellenden Informationen zu ermitteln, ist vorzugsweise die zu filternde Information mit einer Kennung versehen, anhand der der Filter den Kontext der Information, d.h. den Inhalt oder die Art der Information, zuordnen kann. Anhand des Kontextes und der Situation, die sich aus den vorgenannten Parametern bzw. einer Kombination daraus ergibt, führt der Filter eine Klassifizierung durch, indem er die Informationen einer Klasse zuordnet. Klassen können beispielsweise bei der Verwendung der Fahrgeschwindigkeit zur Beschreibung der Situation sein: uneingeschränkt darstellbar, bis zu einer ersten Geschwindigkeit darstellbar, zwischen einer ersten und zweiten Geschwindigkeit eingeschränkt bzw. verändert darstellbar und ab einer vorgegebenen Geschwindigkeit nicht darstellbar, usw.. Diese Klassifikation ist an die Anforderungen in den durch die vorgenannten Parameter definierten Situationen entsprechend anzupassen.

Es ist auch möglich, daß die Kennung der Informationen direkt die Klassifizierung aufweist, so daß der Filter nur die Verknüpfung zwischen der den Informationen bereits beigefügten Klassifizierung und der aktuellen Situation vornehmen muß.

Stammt die darzustellende Information beispielsweise aus dem Internet, so sind die oben genannten Möglichkeiten der Kontextbestimmung anwendbar. Wird der Kontext beispielsweise nach der Herkunft der Information bestimmt, so bedeutet dies, daß der Filter Listen von Internetadressen aufweist, aus denen die Klassifizierung dieser Adressen hervorgeht.

Vorzugsweise kann der Bildaufbau als Folge der Klassifizierung der Informationen geändert werden. Beispielsweise können mit zunehmender Konzentrationsanforderung der Fahrsituation, beispielsweise mit zunehmender Geschwindigkeit, Bildanteile oder Bildinhalte gestrichen werden, so daß das dargestellte Bild auf den wesentlichen Inhalt reduziert wird.

Es ist auch möglich, die Darstellung an Tag und Nacht bzw. an die herrschenden Lichtbedingungen der Umgebung anzupassen, beispielsweise indem die Information verwendet wird, ob das Fahrzeuglicht eingeschaltet ist oder nicht. So kann die Größe der Informationsdarstellung durch eine Tag/Nacht-Umschaltung geeignet angepaßt und/oder die Größe der Darstellung bzw. deren optische Präsentation kann durch die dem Filter zugeführten Parameter bestimmte Situation an die Fahrzeuggeschwindigkeit angepaßt werden

Bei der erfindungsgemäßen Vorrichtung zur Darstellung von optischen Informationen auf einer Anzeigeeinrichtung, mit einer Verarbeitungseinrichtung und mindestens einer Informationsquelle, die beispielsweise eine fahrzeugeigene Navigationseinrichtung, ein Audio- oder Videogerät, eine Klimaanlage als auch das Internet sein kann, ist gemäß der Erfindung die Verarbeitungseinrichtung mit mindestens einer Einrichtung zur Ermittlung der Fahrzeugsituation und/oder der Fahrzeugumgebung und/oder des Aufmerksamkeitsgrades des Fahrzeugführers verbunden und weist einen Filter zum Filtern und/oder Klassifizieren der von der mindestens einen Informationsquelle an die Verarbeitungseinrichtung übergebenen Informationen anhand der ermittelten Fahrzeugsituation und/oder Fahrzeugumgebung und/oder den Aufmerksamkeitsgrad des Fahrzeugführers auf. Dabei ist die Verarbeitungseinrichtung mit dem Filter zur Durchführung der Verfahrensschritte nach einem der Ansprüche 1 bis 12 ausgebildet.

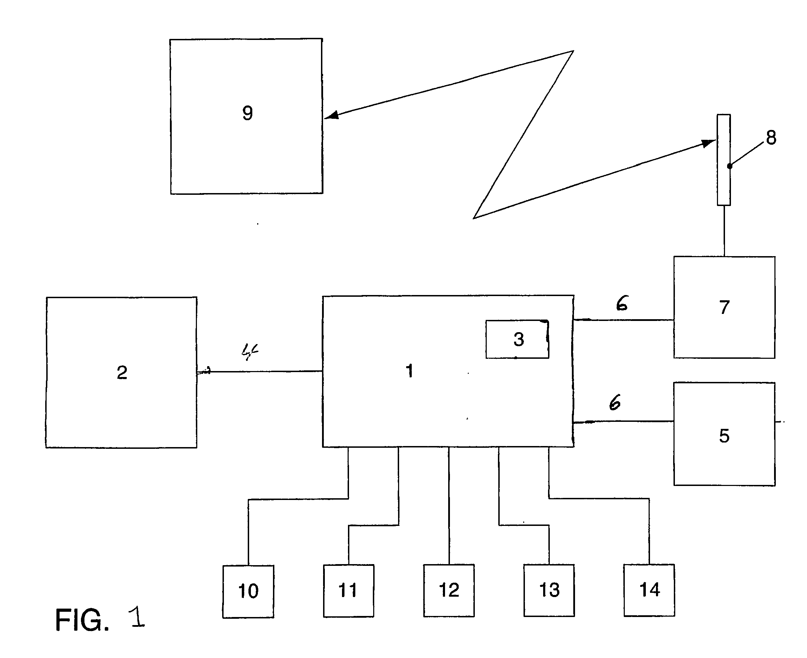

Eine bevorzugte Ausführungsform der erfindungsgemäßen Vorrichtung wird nachfolgend anhand der einzigen Figur näher erläutert.

Die Figur zeigt einen beispielhaften Aufbau einer erfindungsgemäßen Vorrichtung mit einer Verarbeitungseinrichtung 1 und einer mit dieser verbundenen Anzeigeeinrichtung 2. Die Verarbeitungseinrichtung 1 übernimmt gegebenenfalls neben weiteren Aufgaben die Anzeigenaufbereitung und -generierung der Anzeigeeinrichtung 2, wobei sie die entsprechenden Signale 6 zur Anzeige von Informationen sowohl von internen Fahrzeugkomponenten 5, wie Klimaanlage, Audio- und Videoeinrichtungen etc., als auch von externen Einrichtungen 9 über Datennetzwerke (z. B. Internet) und entsprechende fahrzeuginterne Empfangseinrichtungen 7, 8 erhält. Die Verarbeitungseinrichtung 1 weist software- oder hardwaremäßig einen Filter 3 zur Filterung und/oder Klassifizierung der in der Verarbeitungseinrichtung 1 ankommenden Informationssignale 6 auf.

Ferner ist die Verarbeitungseinrichtung 1 mit den unterschiedlichen Einrichtungen 10, 11, 12, 13 zur Ermittlung von Parametern der Fahrsituation, beispielsweise der Fahrgeschwindigkeit, der Fahrzeugneigung, der Gierbewegung etc., der Fahrzeugumgebung, beispielsweise dem Straßentyp, den Witterungsverhältnissen, den Straßenzustand etc., und/oder des Aufmerksamkeitsgrades des Fahrzeugführers, beispielsweise dessen Ermüdung bzw. dessen bereits vorhandene Ablenkung vom Verkehrsgeschehen, verbunden.

Außerdem wird über die Einrichtung 14 der Verarbeitungseinrichtung 1 die momentane Position des Fahrzeuges zugeführt.

Anhand aller oder einzelner der ermittelten Parameter wird eine Situation zur Informationsanzeige bestimmt, mittels derer die eingehenden Informationen im Filter 3 für die Darstellung auf der Anzeigeeinrichtung 2 gefiltert bzw. bearbeitet werden, so dass die Darstellung der Informationen verändert und/oder reduziert wird und/oder einzelne Informationen nicht dargestellt werden. Die Veränderung der Darstellung geschieht nach der Erfindung also nicht aufgrund einer Informationsinhaltsveränderung, sondern aufgrund der Situation, in der sich das Fahrzeug bzw. der Fahrzeugführer befindet.

Eine Möglichkeit der Informationsdarstellung besteht in einer situationsabhängigen Klassifizierung der in der Verarbeitungseinrichtung ankommenden Informationen 6. Wird eine entsprechende Situation des Fahrzeuges bzw. des Fahrzeugführers ermittelt, werden nur die in diese Situation eingestuften Informationen 4 auf der Anzeigeeinrichtung 2 dargestellt, oder gerade diese Informationen nicht dargestellt oder verändert aufbereitet dargestellt.

### BEZUGSZEICHENLISTE

- 1: Verarbeitungseinrichtung
- 2: Anzeigeeinrichtung
- 3: Filter
- 4: anzuzeigende Informationen
- 5: interne Fahrzeugkomponente
- 6: Informationssignale
- 7,8: Empfangseinrichtung
- 9: externe Einrichtung
- 10 - 13: Einrichtungen
- 14: Positionsermittlungseinrichtung

## Patentansprüche

1. Verfahren zur Darstellung von optischen Informationen (6) auf einer Anzeigeeinrichtung (2), insbesondere einem Display, in einem Kraftfahrzeug, wobei die Informationen (6) kontexbezogen in Abhängigkeit von einer Fahrzeugsituation und/oder einer Fahrzeugumgebung und/oder von einem Aufmerksamkeitsgrad des Fahrers dargestellt werden,
**dadurch gekennzeichnet, dass**
die Informationen (6) kontexbezogen vor der Darstellung gefiltert werden, wobei der Kontext der zu filternden Informationen (6) von dem Filter (3) anhand der Herkunft der Informationen bestimmt wird, und wobei zumindest ein Teil der Informationen aus dem Internet (9) abgerufen wird.

2. Verfahren nach Anspruch 1, **dadurch gekennzeichnet, dass** die Filterung eine Klassifizierung der Informationen (6) vornimmt und entsprechend der Klassifizierung die Informationen (4) dargestellt, verändert und/oder reduziert und/oder nicht dargestellt werden.

3. Verfahren nach Anspruch 1 oder 2, **dadurch gekennzeichnet, dass** die Filterung der Informationen (6) in Abhängigkeit zumindest von der Fahrgeschwindigkeit und/oder der Fahrzeugbeschleunigung und/oder der Gierbewegung des Kraftfahrzeuges und/oder der Fahrzeugneigung durchgeführt und/oder verändert wird.

4. Verfahren nach einem der Ansprüche 1 bis 3, **dadurch gekennzeichnet, dass** die Filterung der Informationen (6) in Abhängigkeit der Position (14) des Fahrzeuges durchgeführt und/oder verändert wird.

5. Verfahren nach einem der Ansprüche 1 bis 4, **dadurch gekennzeichnet, dass** die Filterung der Informationen (6) in Abhängigkeit des Straßentyps und/oder der Witterungsverhältnisse vorgenommen und/oder verändert wird.

6. Verfahren nach einem der Ansprüche 1 bis 5, **dadurch gekennzeichnet, dass** die zu filternden Informationen (6) mit einer Kennung versehen sind, anhand der ein Filter (3) die einer fahrzeugintemen Verarbeitungseinrichtung (1) zugeführten Informationen (6) einem Kontext zuordnet, um die Klassifizierung durchzuführen.

7. Verfahren nach einem der Ansprüche 1 bis 6, **dadurch gekennzeichnet, dass** der Bildaufbau der Anzeigeeinrichtung (2) als Folge der Klassifizierung geändert wird.

8. Verfahren nach einem der Ansprüche 1 bis 7, **dadurch gekennzeichnet, dass** die Darstellung und/oder Filterung der Informationen (6) in Abhängigkeit von umgebenden Lichtverhältnissen durchgeführt und/oder verändert wird.

9. Verfahren nach Anspruch 8, **dadurch gekennzeichnet, dass** eine Tag/Nachtumschaltung der Filterung und/oder der Darstellung der Informationen (6) vorgesehen ist.

10. Verfahren nach einem der Ansprüche 1 bis 9, **dadurch gekennzeichnet, dass** die Größe der Darstellung der Informationen (4) in Abhängigkeit der Fahrzeugsituation und/oder der Fahrzeugumgebung und/oder dem Aufmerksamkeitsgrad des Fahrzeugführers auf der Anzeigeeinrichtung (2) unterschiedlich ist und/oder verändert wird.

11. Vorrichtung zur Darstellung von optischen Informationen (4) auf einer Anzeigeeinrichtung (2), mit einer Verarbeitungseinrichtung (1), welcher Informationen (6) einer Informationsquelle (5, 7, 9) zugeführt werden, wobei die Verarbeitungseinrichtung (1) mit mindestens einer Einrichtung (10 - 14) zur Ermittlung der Fahrzeugsituation und/oder der Fahrzeugumgebung und/oder des Aufmerksamkeitsgrades des Fahrzeugführers verbunden ist und einen Filter (3) zum Filtern und/oder Klassifizieren der von der mindestens einen Informationsquelle (5, 7, 9) an die Verarbeitungseinrichtung (1) übergebenen Informationen (6) anhand der ermittelten Fahrzeugsituation und/oder Fahrzeugumgebung und/oder des Aufmerksamkeitsgrades des Fahrzeugführers aufweist,
**dadurch gekennzeichnet, dass**
der Filter (3) derart ausgebildet ist, dass die Informationen (6) kontexbezogen gefiltert werden, wobei der Kontext der zu filternden Informationen (6) von dem Filter (3) anhand der Informationsquelle (5, 7, 9) bestimmbar ist und/oder bestimmt wird, und wobei zumindest eine der Informationsquellen (9) das Internet ist.

12. Vorrichtung nach Anspruch 11, **dadurch gekennzeichnet, dass** die Filterung eine Klassifizierung der Informationen (6) vornimmt und die Verarbeitungseinrichtung (1) weiterhin derart ausgebildet ist, dass die Informationen (6) entsprechend der Klassifizierung dargestellt, verändert und/oder reduziert und/oder nicht dargestellt werden.

13. Vorrichtung nach Anspruch 11 oder 12, **dadurch gekennzeichnet, dass** die Verarbeitungseinrichtung (1) derart ausgebildet ist, dass die Filterung der Informationen (6) zumindest in Abhängigkeit von der Fahrgeschwindigkeit und/oder der Fahrzeugbeschleunigung und/oder der Gierbewegung des Kraftfahrzeuges und/oder der Fahrzeugneigung durchführbar ist und/oder durchgeführt wird.

14. Vorrichtung nach einem der Ansprüche 11 bis 13, **dadurch gekennzeichnet, dass** die Verarbeitungseinrichtung (1) derart ausgebildet ist, dass die Filterung der Informationen (6) in Abhängigkeit der aktuellen Position des Fahrzeuges durchführbar ist und/oder durchgeführt wird.

15. Vorrichtung nach einem der Ansprüche 11 bis 14, **dadurch gekennzeichnet, dass** die Verarbeitungseinrichtung (1) derart ausgebildet ist, dass die Filterung der Informationen (6) in Abhängigkeit des Straßentyps und/oder der Witterungsverhältnisse durchführbar ist und/oder durchgeführt wird.

16. Vorrichtung nach einem der Ansprüche 11 bis 15, **dadurch gekennzeichnet, dass** die zu filternden Informationen (6) mit einer Kennung versehen sind, anhand der der Filter (3) die Informationen einem Kontext zuordnet, um die Klassifizierung durchzuführen.

17. Vorrichtung nach einem der Ansprüche 11 bis 16, **dadurch gekennzeichnet, dass** die Verarbeitungseinrichtung (1) derart ausgebildet ist, das der Bildaufbau der Anzeigeeinrichtung (2) als Folge der Klassifizierung veränderbar ist und/oder verändert wird.

18. Vorrichtung nach einem der Ansprüche 11 bis 17, **dadurch gekennzeichnet, dass** die Verarbeitungseinrichtung (1) derart ausgebildet ist, dass die Darstellung und/oder Filterung der Informationen (6) in Abhängigkeit von umgebenden Lichtverhältnissen durchführbar und/oder veränderbar ist und/oder durchgeführt und/oder verändert wird.

19. Vorrichtung nach Anspruch 18, **dadurch gekennzeichnet, dass** die Verarbeitungseinrichtung (1) derart ausgebildet ist, dass eine Tag/Nachtumschaltung der Filterung und/oder der Darstellung der Informationen (6) durchführbar ist und/oder durchgeführt wird.

20. Vorrichtung nach einem der Ansprüche 11 bis 19, **dadurch gekennzeichnet, dass** die Verarbeitungseinrichtung (1) derart ausgebildet ist, dass die Größe der Darstellung der Informationen (4) in Abhängigkeit der Fahrzeugsituation und/oder der Fahrzeugumgebung auf der Anzeigeeinrichtung (2) unterschiedlich ist und/oder veränderbar ist und/oder verändert wird.

## Claims

1. Method for representing optical information (6) on a display device (2), in particular a display, in a motor vehicle, wherein the information (6) is represented in a context-related fashion as a function of a vehicle situation and/or vehicle surroundings and/or a degree of attentiveness of the driver,
**characterized**
**in that** the information (6) is filtered in a context-related fashion before being represented, wherein the context of the information (6) to be filtered is determined by the filter (3) on the basis of the origin of the information, and wherein at least some of the information is called from the Internet (9).

2. Method according to Claim 1, **characterized in that** the filtering means classifies the information (6), and the information (4) is represented, changed and/or reduced and/or not represented depending on the classification.

3. Method according to Claim 1 or 2, **characterized in that** the filtering of the information (6) is carried out and/or changed as a function of at least the velocity and/or the acceleration of the vehicle and/or the yawing movement of the motor vehicle and/or the inclination of the vehicle.

4. Method according to one of Claims 1 to 3,
**characterized in that** the filtering of the information (6) is carried out and/or changed as a function of the position (14) of the vehicle.

5. Method according to one of Claims 1 to 4,
**characterized in that** the filtering of the information (6) is performed and/or changed as a function of the type of road and/or the weather conditions.

6. Method according to one of Claims 1 to 5,
**characterized in that** the information (6) to be filtered is provided with an identifier on the basis of which a filter (3) assigns the information (6) fed to a vehicle-internal processing device (1) to a context in order to carry out the classification.

7. Method according to one of Claims 1 to 6,
**characterized in that** the structure of the image of the display device (2) is changed as a result of the classification.

8. Method according to one of Claims 1 to 7,
**characterized in that** the representation and/or filtering of the information (6) is carried out and/or changed as a function of ambient light conditions.

9. Method according to Claim 8, **characterized in that** a day/night switch-over process of the means for filtering and/or representing the information (6) is provided.

10. Method according to one of Claims 1 to 9,
**characterized in that** the size of the representation of the information (4) on the display device (2) varies and/or is changed as a function of the situation of the vehicle and/or the vehicle surroundings and/or the degree of attentiveness of the driver of the vehicle.

11. Device for representing optical information (4) on a display device (2), having a processing device (1) to which information (6) of an information source (5, 7, 9) is fed, wherein the processing device (1) is connected to at least one device (10-14) for determining the situation of the vehicle and/or the surroundings of the vehicle and/or the degree of attentiveness of the driver of the vehicle, and has a filter (3) for filtering and/or classifying, on the basis of the determined vehicle situation and/or surroundings of the vehicle and/or the degree of attentiveness of the driver of the vehicle, the information (6) which is transferred to the processing device (1) from the at least one information source (5, 7, 9),
**characterized in that**
the filter (3) is embodied in such a way that the information (6) is filtered in a context-related fashion, wherein the context of the information (6) to be filtered can be and/or is determined by the filter (3) on the basis of the information source (5, 7, 9), and wherein at least one of the information sources (9) is the Internet.

12. Device according to Claim 11, **characterized in that** the filtering means performs classification of the information (6), and the processing device (1) is also designed in such a way that the information (6) is represented, changed and/or reduced and/or not represented depending on the classification.

13. Device according to Claim 11 or 12, **characterized**
**in that** the processing device (1) is embodied in such a way that the filtering of the information (6) can be and/or is carried out at least as a function of the velocity and/or the acceleration of the vehicle and/or the yawing movement of the motor vehicle and/or the inclination of the vehicle.

14. Device according to one of Claims 11 to 13, **characterized in that** the processing device (1) is embodied in such a way that the filtering of the information (6) can be and/or is carried out as a function of the current position of the vehicle.

15. Device according to one of Claims 11 to 14, **characterized in that** the processing device (1) is embodied in such a way that the filtering of the information (6) can be and/or is carried out as a function of the type of road and/or the weather conditions.

16. Device according to one of Claims 11 to 15, **characterized in that** the information (6) to be filtered is provided with an identifier on the basis of which the filter (3) assigns the information to a context in order to carry out the classification.

17. Device according to one of Claims 11 to 16, **characterized in that** the processing device (1) is embodied in such a way that the structure of the image of the display device (2) can be and/or is changed as a result of the classification.

18. Device according to one of Claims 11 to 17, **characterized in that** the processing device (1) is embodied in such a way that the representation and/or filtering of the information (6) can be carried out and/or changed and/or is carried out and/or changed as a function of ambient light conditions.

19. Device according to Claim 18, **characterized in that** the processing device (1) is embodied in such a way that a day/night switch-over process of the means for filtering and/or representing the information (6) can be carried out and/or is carried out.

20. Device according to one of Claims 11 to 19, **characterized in that** the processing device (1) is embodied in such a way that the size of the representation of the information (4) on the display device (2) varies and/or can be changed and/or is changed as a function of the situation of the vehicle and/or the vehicle surroundings.

## Revendications

1. Procédé de représentation d'informations optiques (6) sur un dispositif d'affichage (2), notamment sur un écran dans un véhicule automobile, les informations (6) étant représentées en rapport avec le contexte, en fonction d'une situation du véhicule et/ou d'un environnement du véhicule et/ou d'un degré d'attention du conducteur,
**caractérisé en ce que**
les informations (6) sont filtrées en rapport avec le contexte avant d'être représentées, le contexte des informations à filtrer (6) étant défini par le filtre (3) à l'aide de la provenance des informations et au moins une partie des informations étant interrogée sur Internet (9).

2. Procédé selon la revendication 1, **caractérisé en ce que** le filtrage procède à une classification des informations (6) et en fonction de la classification, les informations (4) sont représentées, modifiées et/ou réduites et/ou ne sont pas représentées.

3. Procédé selon la revendication 1 ou 2, **caractérisé en ce que** le filtrage des informations (6) est effectué et/ou modifié en fonction d'au moins la vitesse du véhicule et/ou de l'accélération du véhicule et/ou du braquage du véhicule et/ou de l'inclinaison du véhicule.

4. Procédé selon l'une quelconque des revendications 1 à 3, **caractérisé en ce que** le filtrage des informations (6) est effectué et/ou modifié en fonction de la position (14) du véhicule.

5. Procédé selon l'une quelconque des revendications 1 à 4, **caractérisé en ce que** le filtrage des informations (6) est effectué et/ou modifié en fonction du type de route et/ou des conditions climatiques.

6. Procédé selon l'une quelconque des revendications 1 à 5, **caractérisé en ce que** les informations à filtrer (6) sont munies d'une identification, à l'aide de laquelle un filtre (3) affecte à un contexte les informations (6) amenées à un dispositif de traitement (1) interne au véhicule, pour procéder à la classification.

7. Procédé selon l'une quelconque des revendications 1 à 6, **caractérisé en ce que** la structure vidéo du dispositif d'affichage (2) est modifiée en tant que conséquence de la classification.

8. Procédé selon l'une quelconque des revendications 1 à 7, **caractérisé en ce que** la représentation et/ou le filtrage des informations (6) est effectué et/ou modifié en fonction de conditions de luminosité environnantes.

9. Procédé selon la revendication 8, **caractérisé en ce qu'**il est prévu une commutation jour/nuit du filtrage et/ou de la représentation des informations (6).

10. Procédé selon l'une quelconque des revendications 1 à 9, **caractérisé en ce que** la dimension de la représentation des informations (4) est différente et/ou modifiée sur le dispositif d'affichage (2) en fonction de la situation du véhicule et/ou de l'environnement du véhicule et/ou du degré d'attention du conducteur du véhicule.

11. Dispositif de représentation d'informations optiques (4) sur un dispositif d'affichage (2), avec un dispositif de traitement (1), auquel sont amenées des informations (6) d'une source d'informations (5, 7, 9), le dispositif de traitement (1) étant relié à au moins un dispositif (10 à 14) pour déterminer la situation du véhicule et/ou l'environnement du véhicule et/ou le degré d'attention du conducteur du véhicule et comportant un filtre (3) pour filtrer et/ou pour classifier les informations (6) transmises au dispositif de traitement (1) par l'au moins une source d'informations (5, 7, 9) à l'aide de la situation du véhicule et/ou de l'environnement du véhicule et/ou du degré d'attention du conducteur du véhicule déterminés,
**caractérisé en ce que**
le filtre (3) est conçu de sorte que les informations (6) soient filtrées en rapport avec le contexte, le contexte des informations à filtrer (6) étant susceptible d'être déterminé ou étant déterminé par le filtre (3) à l'aide de la source d'informations (5, 7, 9) et au moins l'une des sources d'informations (9) étant Internet.

12. Dispositif selon la revendication 11, **caractérisé en ce que** le filtrage procède à une classification des informations (6) et **en ce que** par ailleurs, le dispositif de traitement (1) est conçu de sorte que les informations (6) soient représentées, modifiées et/ou réduites et/ou ne soient pas représentées en fonction de la classification.

13. Dispositif selon la revendication 11 ou 12,
**caractérisé en ce que** le dispositif de traitement (1) est conçu de sorte que le filtrage des informations (6) soit susceptible d'être effectué et/ou soit effectué au moins en fonction de la vitesse du véhicule et/ou de l'accélération du véhicule et/ou du braquage du véhicule et/ou de l'inclinaison du véhicule.

14. Dispositif selon l'une quelconque des revendications 11 à 13, **caractérisé en ce que** le dispositif de traitement (1) est conçu de sorte que le filtrage des informations (6) soit susceptible d'être effectué et/ou soit effectué en fonction de la position actuelle du véhicule.

15. Dispositif selon l'une quelconque des revendications 11 à 14, **caractérisé en ce que** le dispositif de traitement (1) est conçu de sorte que le filtrage des informations (6) soit susceptible d'être effectué et/ou soit effectué en fonction du type de route et/ou des conditions climatiques.

16. Dispositif selon l'une quelconque des revendications 11 à 15, **caractérisé en ce que** les informations à filtrer (6) sont munies d'une identification, à l'aide de laquelle le filtre (3) affecte les informations à un contexte, pour procéder à la classification.

17. Dispositif selon l'une quelconque des revendications 11 à 16, **caractérisé en ce que** le dispositif de traitement (1) est conçu de sorte que la structure vidéo du dispositif d'affichage (2) soit susceptible d'être modifiée et/ou soit modifiée en tant que conséquence de la classification.

18. Dispositif selon l'une quelconque des revendications 11 à 17, **caractérisé en ce que** le dispositif de traitement (1) est conçu de sorte que la représentation et/ou le filtrage des informations (6) soit susceptible d'être effectué et/ou susceptible d'être modifié et/ou soit effectué et/ou soit modifié en fonction de conditions de luminosité environnantes.

19. Dispositif selon la revendication 18, **caractérisé en ce que** le dispositif de traitement (1) est conçu de sorte qu'une commutation jour/nuit du filtrage et/ou de la représentation des informations (6) soit susceptible d'être effectuée et/ou soit effectuée.

20. Dispositif selon l'une quelconque des revendications 11 à 19, **caractérisé en ce que** le dispositif de traitement (1) est conçu de sorte que la dimension de la représentation des informations (4) sur le dispositif d'affichage (2) soit différente et/ou soit susceptible d'être modifiée et/ou soit modifiée en fonction de la situation du véhicule et/ou de l'environnement du véhicule.
